**Europäisches Patentamt**

**European Patent Office**

**Office européen des brevets**

(19)

(11) **EP 1 261 102 A2**

(12) **EUROPÄISCHE PATENTANMELDUNG**

(43) Veröffentlichungstag:
**27.11.2002 Patentblatt 2002/48**

(51) Int Cl.⁷: **H02K 1/16**

(21) Anmeldenummer: **02010337.0**

(22) Anmeldetag: **07.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **18.05.2001 DE 10124415**

(71) Anmelder: **SIEMENS AKTIENGESELLSCHAFT**
**80333 München (DE)**

(72) Erfinder: **Vollmer, Rolf**
**36129 Gersfeld (DE)**

(54) **Elektrische Maschine**

(57)   Um eine hohe Maschinenausnutzung bei annähernd sinusförmigen Verlauf der Magnetfelder zu erreichen, wird eine elektrische Synchronmaschine mit folgenden Merkmalen vorgeschlagen:

- einem Stator und einem Rotor, wobei der Stator eine dreiphasige Wicklung (3) aufweist und der Rotor mit Permanentmagneten bestückt ist,
- die dreiphasige Wicklung (3) ist in Nuten des Stators angeordnet,

- die Nuten des Stators werden durch im wesentlichen axial verlaufende Zähne (7,8) gebildet, die wenigstens zwei unterschiedliche Zahnteilungsbreiten $\tau_{zb}$ aufweisen und die in Umfangsrichtung des Stators abwechselnd angeordnet sind, wobei deren Anzahl jeweils identisch ist,
- nur die Zähne (7) mit gegenüber anderen Zähnen (8) großer Zahnteilungsbreite sind von einer Wicklung (3) zumindest teilweise umgeben.

**FIG 1**

**EP 1 261 102 A2**

**Beschreibung**

Die Erfindung betrifft eine elektrische Synchronmaschine mit einem Stator und einem Rotor, wobei der Stator eine dreiphasige Wicklung aufweist und der Rotor mit Permanentmagneten bestückt ist.

Eine derartige Synchronmaschine ist eine drehende Wechselstrommaschine, deren Erregerfeld im Läufer durch Dauermagnete entsteht. Als Motor arbeitet diese Maschine, wenn ihre Ständerwicklung mit Drehstrom gespeist wird. Der Rotor dreht synchron mit dem Drehfeld unabhängig von der Höhe des Lastmomentes. Als Synchrongenerator muss diese Maschine an der Welle angetrieben werden. Sie wandelt die mechanische Energie in elektrische um, die vom Stator ins Netz gespeist wird. Dies wirkt sich ungünstig auf die Drehmomentcharakteristik, auf die Verlustbilanz und die Geräusche der Synchronmaschine aus. Diese Abweichungen werden u.a. durch Oberfelder höherer Polzahl erzeugt, die dem Grundfeld überlagert sind.

Bei den 3-phasigen Synchronmaschinen sind Wicklungen bekannt, die zur Vermeidung der Induktion von Oberfeldern in die Wicklung unterschiedliche Spulenbreiten haben.

Es handelt sich um verschachtelte Wicklungen die in Nuten $N_1$ liegen. Die Anzahl der Nuten $N_1$ ist dabei größer als das 3-fache der Polzahl 2p. $N_1 > 3 \cdot 2p$.

Es gibt auch Wicklungen mit kostengünstigen Zahnspulen. Dabei wird eine Spule um einen Statorzahn gebracht.

Der Vorteil gegenüber den verschachtelten Wicklungen ist einerseits die vereinfachte Wickeltechnik und andererseits das Vermeiden von Berührungen von Wicklungen im Wickelkopfbereich.

Nachteilig dabei ist aber ein ungünstiger Wickelfaktor für Oberfelder. Bei der Zahnspulenwicklung mit der Lochzahl q=½, d.h. $N_1$=1,5·2p sind die Wickelfaktoren (wifa) für die fünfte und siebte Oberwelle sehr hoch wifa (5./7.) = 0,806. Dies führt zu erhöhter Drehmomentwelligkeit bei entsprechenden Motoren.

Der Erfindung liegt demnach die Aufgabe zugrunde, eine elektrische Synchronmaschine, insbesondere für Drehstromanwendungen zu schaffen, die geringe Herstellungskosten von Statoren verursacht und gleichzeitig eine hohe Maschinenausnutzung bei annähernd sinusförmigen Verlauf der Magnetfelder aufweist.

Die Lösung der gestellten Aufgabe gelingt durch eine elektrische Synchronmaschine mit folgenden Merkmalen:

-    einem Stator und einem Rotor, wobei der Stator eine dreiphasige Wicklung aufweist und der Rotor mit Permanentmagneten bestückt ist,
-    die dreiphasige Wicklung ist in Nuten des Stators angeordnet,
-    die Nuten des Stators werden durch im wesentlichen axial verlaufende Zähne gebildet, die wenigstens zwei unterschiedliche Zahnteilungsbreiten aufweisen und die in Umfangsrichtung des Stators abwechselnd angeordnet sind wobei deren Anzahl jeweils identisch ist,
-    nur die Zähne mit gegenüber anderen Zähnen großer Zahnteilungsbreite sind von einer Wicklung zumindest teilweise umgeben.

Durch den erfindungsgemäßen Aufbau erzeugt die elektrische Maschine einen nahezu oberwellengefilterten Magnetfeldverlauf. Vorteilhaft ist außerdem, dass nur jeder zweite Zahn mit Spulen zu bewickeln ist. Damit wird nur die Hälfte an Spulen benötigt, was zu einer Kostenreduzierung führt. Es sind damit keine Phasenzwischenlagen zwischen zwei benachbarten Spulen vorzusehen. Damit tritt eine weitere Kosteneinsparung auf. Außerdem können die Wicklungsfaktoren nahe eins erreicht werden, was zu einer Verbesserung der Ausnutzung der elektrischen Synchronmaschine führt. Der Wicklungsfaktor setzt sich u.a. zusammen aus Zonenfaktor und Sehnungsfaktor. Die Wicklungsspulen sind als Zahnspulen ausgeführt und sind um jeweils die Zähne positioniert, die die größeren Zahnteilungsbreiten aufweisen.

Durch Ausprägung der Zähne im Bereich des Luftspalts derart, dass die zwischen zwei Zähnen vorhandene Nutschlitzbreite im Bereich des Luftspalts zumindest abschnittsweise kleiner ist als die kleinste Nutbreite zwischen diesen Zähnen, wird erreicht, dass eine verbesserte Magnetfeldführung und zugleich eine vorteilhafte Fixierung der Zahnspulen an den Polen mit größerer Teilungsbreite vorhanden ist, mit anderen Worten: Die Zahnköpfe sind breiter als die Zahnschäfte und symmetrisch ausgeführt. Dabei ist es vorteilhaft, wenn die Zahnköpfe durch form- und/oder reibschlüssige Verbindungen am Zahnschaft zu befestigen sind. Damit erleichtert sich die Montage der Zahnspulen wesentlich.

Durch Wahl der Zahnbreiten und Polbreiten gemäß der vorhergehenden konstruktiven Ausführungen, stellt sich ein davon abhängiger Wicklungsfaktor

$$\texttt{wifa}\ \left(\nu, \tau_{zb}\right) = 0{,}5 \cdot \left(1 - \cos\left(\frac{\tau_{zb}}{\tau_p} \cdot \nu \cdot \pi\right)\right)^{1/2}$$

ein.

Dabei ist $\tau_p$ die Polteilung

$$\nu = 1 \qquad \text{die Grundwelle}$$

$$\nu = 2{,}3 \ldots \text{die jeweilige Oberwelle}$$

$$\tau_{zb} = \qquad \text{die Teilungsbreite des bewickelten Zahns.}$$

Vorteilhaft ist, aus konstruktiver Hinsicht, wenn $\tau_{zb}$ im Intervall zwischen 0,66 x $\tau_p$ und 1 x $\tau_p$ liegt.

Weitere vorteilhafte Ausführungen sind den weiteren Unteransprüchen zu entnehmen.

Die Erfindung sowie weitere vorteilhafte Ausgestaltungen der Erfindung gemäß Merkmale der Unteransprüche werden im folgenden anhand schematisch dargestellter Ausführungsbeispiele in der Zeichnung näher erläutert. Darin zeigen:

FIG 1 einen segmentartig aufgebauten Stator,
FIG 2 einen Stator.

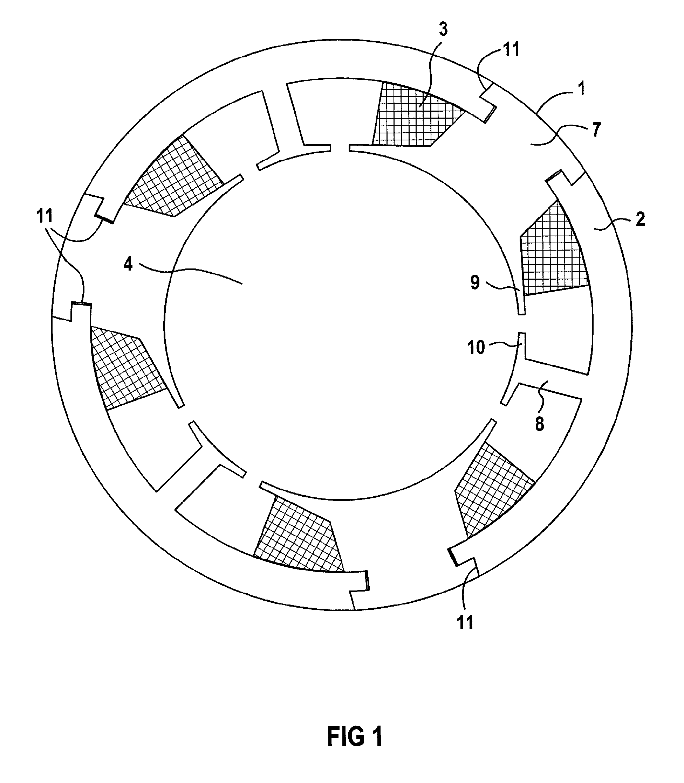

FIG 1 zeigt einen in Umfangsrichtung segmentartig aufgebauten Stator mit Segmenten 1 und 2, die in Umfangsrichtung aneinander gefügt form- und/oder reibschlüssig aneinander haften und die Rotorbohrung 4 umschließen. Der Zahn 7 des Segments 1 ist dabei mit einer Wicklung 3 versehen, die als Zahnspule ausgeführt ist. Das Segment 2, das den Zwischenzahn 8 enthält, ist unbewickelt. Die Segmente 1, 2 sind so aneinandergefügt, dass der magnetische Widerstand an der Übergangsstelle 11 nur unerheblich steigt.

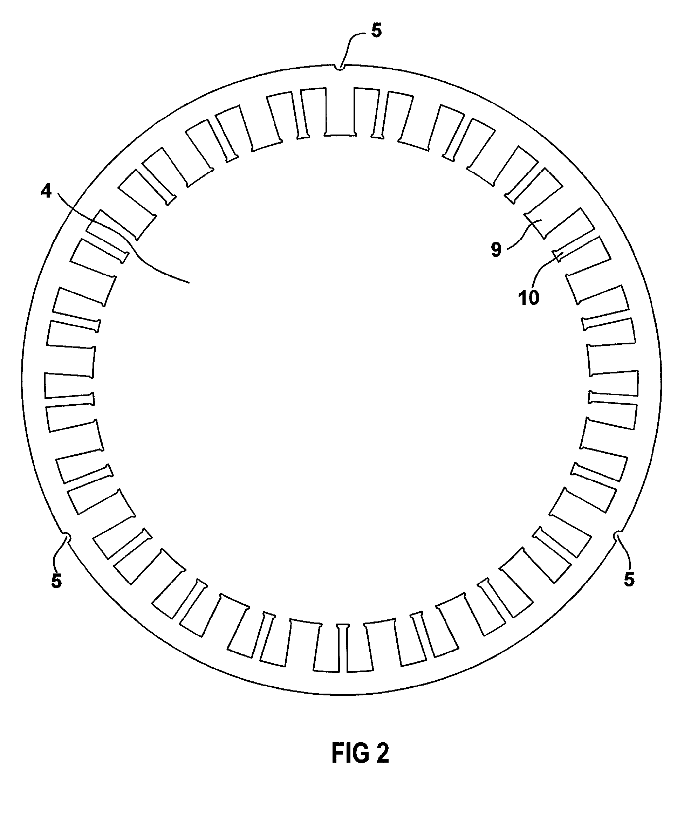

FIG 2 zeigt einen Gesamtblechschnitt einer derartigen elektrischen Synchronmaschine mit zwei unterschiedlichen Zahnbreiten. Die Zahnköpfe 9, 10 in Richtung Luftspalt sind dabei wesentlich weniger ausgeprägt als in FIG 1, so dass eine einfache Montage der Zahnspulen erreicht wird. Der Blechschnitt zeigt außerdem Ausnehmungen 5 am radial äußeren Rand des Blechschnitts, in die vorteilhafterweise dementsprechende Aufnahmeelemente eines nicht näher dargestellten Gehäuses eingreifen können.

### Patentansprüche

1. Elektrische Synchronmaschine mit folgenden Merkmalen:

   - einem Stator und einem Rotor, wobei der Stator eine dreiphasige Wicklung (3) aufweist und der Rotor mit Permanentmagneten bestückt ist,
   - die dreiphasige Wicklung (3) ist in Nuten des Stators angeordnet,
   - die Nuten des Stators werden durch im wesentlichen axial verlaufende Zähne (7,8) gebildet, die wenigstens zwei unterschiedliche Zahnteilungsbreiten $\tau_{zb}$ aufweisen und die in Umfangsrichtung des Stators abwechselnd angeordnet sind, wobei deren Anzahl jeweils identisch ist,
   - nur die Zähne (7) mit gegenüber anderen Zähnen (8) großer Zahnteilungsbreite sind von einer Wicklung (3) zumindest teilweise umgeben.

2. Elektrische Synchronmaschine nach Anspruch 1, **dadurch gekennzeichnet, dass** die Wicklungen (3) als Zahnspulen ausgeführt sind, die jeweils um einen Zahn (7) mit großer Zahnteilungsbreite positioniert sind.

3. Elektrische Synchronmaschine nach Anspruch 1 oder 2, **dadurch gekennzeichnet, dass** die zwischen zwei Zähnen (7,8) vorhandene Nutschlitzbreite im Bereich des Luftspalts zumindest abschnittsweise kleiner ist als die kleinste Nutbreite zwischen diesen Zähnen (7,8).

4. Elektrische Synchronmaschine nach einem oder mehreren der vorhergehenden Ansprüche **dadurch gekennzeichnet,dass** der Wicklungsfaktor nach folgender Beziehung gewählt ist:

$$\text{wifa}\ \left(\nu, \tau_{zb}\right) = 0,5 \cdot \left(1 - \cos\left(\frac{\tau_{zb}}{\tau_p} \cdot \nu \cdot \pi\right)\right)^{1/2}$$

wobei $\tau_p$ die Polteilung

$\nu = 1$      die Grundwelle

$\nu = 2,3$ .die Oberwelle

$\tau_{zb} =$      Teilungsbreite des bewickelten Zahns ist.

5. Elektrische Synchronmaschine nach Anspruch 4, **dadurch gekennzeichnet, dass** $\tau_{zb}$ im Intervall zwischen 0,66 x $\tau_p$ und 1 x $\tau_p$ liegt.

6. Elektrische Synchronmaschine nach einem der vorhergehenden Ansprüche, **dadurch gekennzeichnet, dass** die Anzahl der Nuten N1 zwischen den Zähnen (7,8) dem 1,5-fachen der Polzahl 2p entspricht.

7. Elektrische Synchronmaschine nach einem oder mehreren der vorhergehenden Ansprüche, **dadurch gekennzeichnet,dass** der Stator in Umfangsrichtung durch Segmente (1,2) zusammengesetzt ist.

8. Elektrische Synchronmaschine nach Anspruch 7, **dadurch gekennzeichnet, dass** die Segmente (1,2) zumindest einen Zahn (7,8) aufweisen.

9. Elektrische Synchronmaschine nach Anspruch 7 oder 8, **dadurch gekennzeichnet,dass** die einzelnen Segmente (1,2) stoff- und/oder formschlüssig miteinander verbindbar sind.

FIG 1

**FIG 2**